# FASCICULE DE BREVET EUROPEEN

(11) **EP 0 661 423 B1**
(45) Date de publication et mention de la délivrance du brevet: **09.07.1997**
(21) Numéro de dépôt: 94402580.8
(22) Date de dépôt: 15.11.1994
(51) Int. Cl.: F02B 19/08, F02B 19/16

(54) **Moteur à allumage par compression à écoulement de gaz dirigé, à la sortie d'une chambre de turbulence**
Dieselbrennkraftmaschine mit am Ausgang der Wirbelkammer gesteuertem Gasstrom
Diesel engine with directed gas flow at the exit of a swirl chamber

(30) Priorité: 01.12.1993 FR 9314406
(43) Date de publication de la demande: 05.07.1995
(73) Titulaire: AUTOMOBILES PEUGEOT, 75116 Paris (FR); AUTOMOBILES CITROEN, 92200 Neuilly-sur-Seine (FR)
(72) Inventeur: Delage, Alain, F-92800 Puteaux (FR); Marez, Patrice, F-92250 La Garenne-Colombes (FR)
(74) Mandataire: Bouget, Lucien

(56) Documents cités:
- DE-A- 2 703 228
- DE-A- 4 236 398
- GB-A- 2 053 347

## Description

L'invention concerne un moteur à allumage par compression comportant au moins un cylindre dans lequel un piston est monté mobile dans la direction de l'axe du cylindre et une préchambre de turbulence à écoulement de gaz dirigé, à la sortie de la préchambre.

On connaît des moteurs à allumage par compression ou moteurs Diesel comportant, associée à chacun de leurs cylindres, une préchambre de turbulence. Le moteur comporte un bloc-cylindre au-dessus duquel est placée une culasse ; à l'intérieur de la culasse, sont disposées les préchambres de turbulence de forme approximativement sphérique. Les préchambres de turbulence sont destinées à assurer une bonne qualité de mélange entre le gazole injecté au sein de la préchambre et l'air comburant refoulé dans la préchambre et animé d'un mouvement tourbillonnaire intense. Chacune des préchambres est reliée par un canal de transfert sensiblement rectiligne à une chambre principale qui est délimitée, à l'intérieur du cylindre correspondant, par la tête du piston et par une partie adjacente de la culasse.

Le canal de transfert présente une faible section par rapport à la section du piston du cylindre-moteur auquel est associée la préchambre. Pendant la course du piston correspondant à la compression, l'air provenant du cylindre circule dans le canal de transfert à une très grande vitesse, si bien qu'un mouvement tourbillonnaire énergique se produit dans la préchambre. On effectue une injection de carburant, grâce à un injecteur fixé dans la culasse et débouchant dans la préchambre, pendant la phase de compression au cours de laquelle l'air est animé d'un mouvement tourbillonnaire à l'intérieur de la préchambre. Le carburant est ainsi mélangé de manière intime et efficace à l'air assurant la combustion. La combustion est initiée dans la préchambre et se propage à l'intérieur de la chambre principale du cylindre à travers le canal de transfert.

Pendant la phase de détente, au cours de laquelle a lieu la combustion, le canal de transfert assure l'alimentation de la chambre principale au-dessus du piston en gaz chauds de combustion issus de la préchambre.

Pendant la phase de détente, lors du déroulement de la combustion, la faible section du canal de transfert permet d'obtenir une très forte vitesse d'éjection des gaz chauds (brûlés et non brûlés) de la préchambre, dans la chambre principale du cylindre contenant de l'air comburant.

Le dessus du piston est généralement usiné pour présenter une cavité de faible épaisseur en forme de trèfle comportant deux lobes. Cette cavité assure un mélange efficace des gaz chauds et de l'air comburant dans la chambre principale du cylindre et la formation de deux écoulements contrarotatifs à partir du jet de gaz chauds provenant de la préchambre.

Pour faciliter le démarrage du moteur à froid, on assure un préchauffage de la préchambre en utilisant une bougie de préchauffage comportant un élément de chauffage rectiligne qui est en saillie à l'intérieur de la préchambre.

Dans une disposition classique des préchambres d'un moteur à allumage par compression, l'élément de chauffage rectiligne de la bougie de préchauffage est disposé dans une direction sensiblement parallèle à l'axe du cylindre et fait saillie à l'intérieur de la préchambre, dans une zone située en aval de l'injecteur de carburant, dans le sens de circulation des gaz à l'intérieur de la préchambre.

La préchambre est le siège d'un mouvement tourbillonnaire intense, pendant les phases de remplissage et de vidange de la préchambre. Du fait de la position de l'élément de chauffage de la bougie de préchauffage, l'écoulement en forme de tourbillon à l'intérieur de la préchambre se trouve décollé de la paroi interne de la préchambre en aval de la bougie de préchauffage. Cet écoulement ne peut donc venir en contact avec la partie de la paroi de la préchambre située entre la bougie de préchauffage et la surface interne de la préchambre sur laquelle débouche le canal de transfert, qui est généralement de forme plane.

Dans la zone de sortie correspondante de la préchambre, en-dessous de la bougie de préchauffage, l'écoulement des gaz est donc perturbé, si bien qu'on se trouve en présence d'un écoulement à faible vitesse et de courants de recirculation dans une partie de la zone de sortie de la préchambre qui constitue une zone morte.

Lorsque des gouttelettes liquides de carburant se trouvent présentes dans cette zone morte, ces gouttelettes ayant ou non subi préalablement des impacts, les conditions de mélange de ces gouttelettes avec les gaz dans la préchambre et donc les conditions de vaporisation des gouttelettes sont dégradées.

Il peut en résulter une mauvaise combustion qui se traduit par des niveaux élevés d'hydrocarbures imbrûlés et de suies de combustion dans les gaz du moteur.

La configuration d'un moteur à allumage par compression comportant une préchambre telle que décrite plus haut est généralement désignée par les spécialistes par le terme anglais "Advanced Comet".

Le but de l'invention est donc de proposer un moteur à allumage par compression comportant au moins un cylindre dans lequel un piston est monté mobile dans la direction de l'axe du cylindre et une préchambre de turbulence dans laquelle débouche un injecteur de carburant ayant une paroi interne de forme sensiblement sphérique communiquant avec le cylindre par l'intermédiaire d'un canal de transfert sensiblement rectiligne disposé sensiblement tangentiellement par rapport à la paroi interne de la préchambre qui est traversée dans une direction sensiblement parallèle à l'axe du cylindre, en aval de l'injecteur dans le sens de circulation des gaz du moteur, par un élément de chauffage rectiligne d'une bougie de préchauffage, ce moteur à allumage par compression permettant d'améliorer les conditions de circulation des gaz dans la partie de sortie de la préchambre, au moment de la détente et le mélange des gaz avec du carburant introduit dans la préchambre, de telle sorte que la combustion soit améliorée, ce qui permet de réduire les niveaux d'hydrocarbures imbrûlés et de suies de combustion dans les gaz d'échappement du moteur.

Dans ce but, une partie de la paroi interne de la préchambre située en aval de l'injecteur, dans le prolongement de l'élément de chauffage de la bougie de préchauffage, comporte un bossage profilé en saillie vers l'intérieur de la préchambre s'étendant entre la partie d'extrémité de l'élément de chauffage et une zone voisine du canal de transfert.

Afin de bien faire comprendre l'invention, on va maintenant décrire à titre d'exemple non limitatif en se référant aux figures jointes en annexe, un mode de réalisation d'un moteur suivant l'invention dont la préchambre présente une forme améliorée.

La figure 1 est une vue en coupe par un plan vertical passant par l'axe d'un cylindre, d'une partie d'un moteur Diesel comportant une préchambre de turbulence, de type Advanced Comet.

La figure 2 est une vue en coupe analogue à la vue de la figure 1, de la partie supérieure d'un cylindre et de la préchambre de turbulence d'un moteur Diesel selon l'invention.

La figure 3 est une vue en coupe suivant 3-3 de la figure 2.

La figure 4 est une vue de dessus d'une pièce rapportée à l'intérieur de la culasse pour constituer une partie de la paroi de la préchambre.

La figure 5 est une vue en perspective d'une partie de la pièce rapportée représentée sur la figure 4.

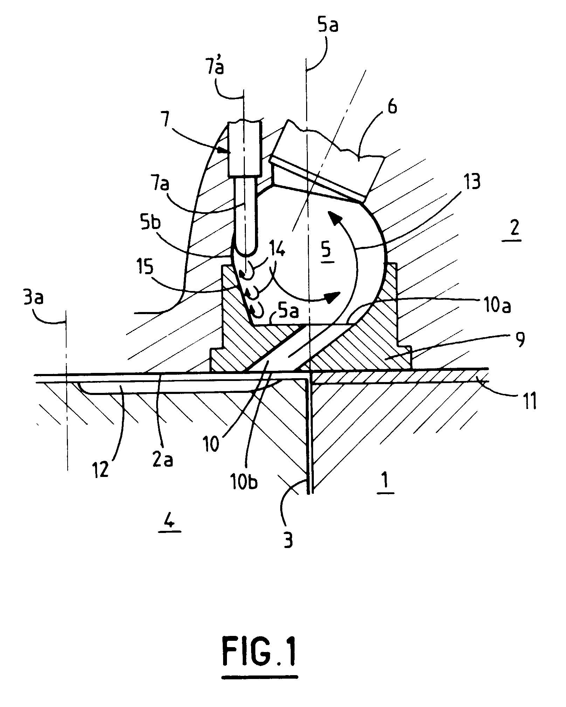

Sur la figure 1, on voit une partie du bloc-cylindre 1 et de la culasse 2 d'un moteur à allumage par compression.

Le bloc-cylindre 1 comporte des cylindres tels que 3 dans chacun desquels se déplace un piston 4 dans la direction de l'axe 3a du cylindre 3. La culasse 2 est usinée au-dessus de chacun des cylindres 3 de façon à délimiter, à sa partie supérieure, une préchambre de turbulence 5 comportant un injecteur de carburant 6 et une bougie de préchauffage 7 comportant un élément de chauffage 7a en saillie à l'intérieur de la préchambre 5.

La préchambre 5 de forme sensiblement sphérique qui est délimitée à sa partie supérieure par une paroi interne hémisphérique usinée à l'intérieur de la culasse 2 comporte une partie inférieure usinée à l'intérieur d'une pièce 9 rapportée et fixée à l'intérieur d'un logement usiné dans la culasse 2.

Un canal de transfert 10 de direction sensiblement tangentielle par rapport à la paroi interne de la préchambre 5 est usiné à l'intérieur de la pièce 9 et met en communication la partie supérieure du cylindre 3 au-dessus du piston 4 constituant la chambre principale du cylindre, avec la partie inférieure de la préchambre 5.

L'axe 7'a de l'élément de chauffage 7a rectiligne de la bougie de préchauffage 7 est sensiblement parallèle à l'axe 5a de la préchambre 5 ayant la direction de l'axe 3a du cylindre 3. L'axe 7'a de l'élément de chauffage 7a est sensiblement perpendiculaire au plan de joint 2a de la culasse 2 suivant lequel la culasse est rapportée sur le cylindre 1 avec interposition d'un joint de culasse 11.

L'élément de chauffage 7a de la bougie de préchauffage fait saillie à l'intérieur de la préchambre 5, dans une zone de la préchambre située en aval de la zone dans laquelle débouche l'injecteur 6, si l'on considère la circulation des gaz dans la préchambre 5 schématisée par les flèches 13.

La surface supérieure du piston 4 est usinée pour que le piston 4 présente une cavité 12 en forme de trèfle venant dans le prolongement de l'extrémité 10b du canal 10 opposée à son ouverture 10a débouchant dans la préchambre, lorsque la tête du piston 4 est au voisinage du plan d'appui 2a de la culasse, en fin de compression.

Lors de la détente et de la combustion, les gaz chauds provenant de la préchambre 5 par le canal de transfert 10 sont introduits dans la cavité 12 en forme de trèfle pour constituer deux écoulements contrarotatifs.

Dans la phase de compression, comme représenté sur la figure 1, l'air refoulé par le piston 4 pénétrant dans le canal 10 et par son intermédiaire dans la préchambre 5 constitue un écoulement tourbillonnaire schématisé par les flèches 13 qui vient au contact de l'élément chauffant 7a de la bougie de préchauffage 7, en aval de la zone dans laquelle débouche l'injecteur 6.

De ce fait, le courant tourbillonnaire de gaz 13 est décollé de la partie de paroi interne 15 de la préchambre 5 située en-dessous de la bougie de préchauffage 7 et comprise entre l'extrémité de l'élément chauffant 7a de la bougie et une surface plane 5a de la surface interne de la préchambre 5 sur laquelle débouche le canal 10 par son ouverture 10a.

La zone 5b de la préchambre située au voisinage de la paroi 15 qui constitue la partie de sortie de la préchambre si l'on considère le sens de circulation des gaz donné par les flèches 13, n'est pas balayée par le courant tourbillonnaire principal de gaz. Dans la zone 5b, se développent des courants parasites 14 à faible vitesse et des courants de déviation du courant principal par l'élément chauffant 7a de la bougie 7. La zone 5b qui est le siège de courants à faible vitesse est une zone morte. Lorsque des gouttelettes de liquide parviennent dans la zone 5b, les conditions de mélange et de vaporisation de ces gouttelettes sont fortement dégradées par rapport aux conditions régnant dans les autres parties de la préchambre 5.

En outre, lors de la phase de combustion et de détente, le transfert vers la chambre principale du cylindre des gaz contenus dans la zone 5b constituant une partie de la zone de sortie de la préchambre ne peut être réalisé de manière satisfaisante dans la mesure où la zone 5b ne se trouve pas sur le passage du courant tourbillonnaire principal des gaz dans la préchambre. Il peut en résulter de mauvaises conditions de vidange de la préchambre au moment de la détente.

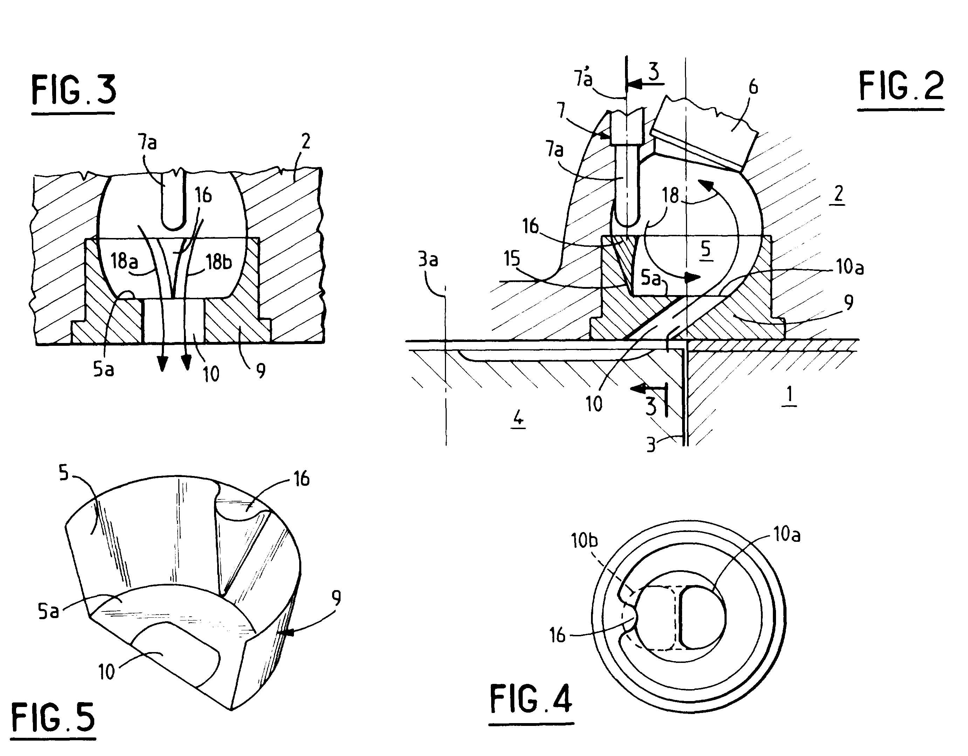

Sur la figure 2, on a représenté dans une vue en coupe analogue à la vue de la figure 1, un moteur suivant l'invention qui est identique au moteur représenté sur la figure 1, à l'exception de la pièce rapportée 9 constituant la partie inférieure de la paroi de la préchambre 5 qui présente une surface interne dont la forme permet d'améliorer le fonctionnement du moteur.

Les éléments correspondants sur les figures 1 et 2 portent les mêmes repères.

Selon l'invention, la pièce 9 rapportée à l'intérieur de la culasse 2 constituant la partie inférieure de la paroi de la préchambre 5 comporte, dans la partie de paroi 15 située dans le prolongement de l'élément chauffant 7a de la bougie de préchauffage 7, un bossage profilé 16 en saillie sur la paroi 15 vers l'intérieur de la préchambre.

Comme il est visible sur les figures 2 et 3, le bossage 16 s'étend dans une zone de la partie 15 de la paroi de la préchambre comprise entre l'extrémité de l'élément chauffant 7a de la bougie 7 et la partie plane 5a de la surface interne de la préchambre 5 qui est traversée par l'ouverture traversante 10a du canal 10. Le bossage 16 est dirigé de manière générale suivant la direction axiale 7'a de l'élément chauffant 7a de la bougie de préchauffage 7 et présente comme plan de symétrie, le plan de symétrie de la préchambre 5 passant par l'axe 3a du cylindre 3.

Comme il est visible sur les figures 2 à 5, le bossage 16 est sensiblement inscrit dans un cône dont le sommet est situé sur la surface plane 5a ou légèrement au-dessus et dont la base est située au niveau de la partie d'extrémité supérieure de la pièce rapportée 9 qui vient en butée à l'intérieur de la culasse 2, en-dessous de l'élément de chauffage 7a de la bougie de préchauffage 7.

Le canal de transfert 10 présente la forme d'un cylindre à base sensiblement elliptique, l'ouverture 10a du canal 10 débouchant sur le fond plat 5a de la préchambre 5 et l'ouverture du canal de transfert 10b débouchant dans la chambre principale du cylindre 3 sur le plan de joint 2a de la culasse 2 ayant elles-mêmes des formes sensiblement elliptique (figure 4).

Comme il est visible sur la figure 4 en particulier, le contour de la base du demi-cône dans lequel est inscrit le bossage 16 présente sensiblement la forme d'un demi-cercle ou d'une demi-ellipse.

On voit, en particulier sur les figures 3 et 5, que le bossage 16 présente une dimension transversale dans une direction parallèle à la paroi 15 et perpendiculaire à l'axe 7'a de l'élément chauffant 7a de la bougie de préchauffage 7 qui est décroissante depuis une valeur sensiblement égale au diamètre de l'élément chauffant 7a de la bougie de préchauffage jusqu'à une valeur sensiblement nulle au-dessus et à proximité de la surface plane 5a de la préchambre 5 sur laquelle débouche le canal de transfert 10 par sa partie 10a.

En outre, comme il est visible sur les figures 2 et 5, la dimension de la saillie du bossage 16 dans une direction perpendiculaire à la surface 15 varie d'une valeur correspondant au rayon de la base du demi-cône (ou du demi-axe de l'ellipse) en-dessous de l'extrémité de l'élément chauffant 7a, jusqu'à une valeur sensiblement nulle à une faible distance au-dessus de la surface plane 5a de la préchambre 5 dans laquelle débouche le canal de transfert.

De préférence, le rayon R de la base du demi-cône est compris entre 0,3 et 0,5 Rs, Rs étant le rayon de la paroi sphérique de la chambre 5. La hauteur h du cône entre son sommet et sa base, le long de la partie de paroi 15 sera de préférence comprise entre 0,5 et 0,8 Rs. Le bossage 16 sera généralement réalisé de façon monopièce avec la pièce rapportée 9 constituant la partie inférieure de la préchambre, lors de l'usinage ou le formage de cette pièce. Cependant, il ne sort pas du cadre de l'invention de réaliser le bossage sous la forme d'un élément usiné indépendamment de la pièce rapportée 9 et fixé sur la surface de cette pièce dans une position voulue.

En fin de phase de compression, lorsque l'air de la chambre principale du cylindre 3 est refoulé dans la préchambre 5 par le piston 4 pour constituer un écoulement tourbillonnaire représenté de manière conventionnelle par les flèches 18 sur la figure 2, l'écoulement 18 rencontre l'élément chauffant 7a puis le bossage 16, de sorte qu'il reste en contact avec une partie de la paroi interne de la préchambre 5 qui assure son guidage. De plus, du fait de la présence du bossage en saillie 16 sur la paroi 15 de la préchambre, la zone morte 5b représentée sur la figure 1, dans le cas d'un moteur selon l'art antérieur, est éliminé, ce qui permet d'éviter l'établissement de mauvaises conditions de mélange et de combustion du carburant dans une partie de la préchambre.

En outre, pendant la phase de détente, après le début de la combustion du mélange de carburant et d'air dans la préchambre, les gaz chauds (brûlés et non brûlés) sont éjectés par le canal de transfert 10 pour être introduits dans la chambre principale du cylindre 3 et constituent deux courants 18a et 18b de part et d'autre de la saillie 16, dans la partie de la préchambre voisine de la surface 15, qui sont guidés en direction de la surface 5a et de l'extrémité du canal de transfert, par les faces latérales du bossage 16.

On améliore ainsi considérablement les conditions de vidange de la partie de sortie de la préchambre.

La disposition suivant l'invention permet donc d'améliorer les conditions de mélange, de vaporisation et donc de combustion du carburant. De plus, cette disposition permet d'améliorer les conditions de vidange de la préchambre lors de la phase de détente.

Il en résulte donc une réduction des niveaux d'hydrocarbures brûlés et de suies de combustion dans les gaz du moteur.

Ces avantages sont obtenus par une modification portant uniquement sur la partie de la préchambre rapportée à l'intérieur de la culasse. Cette modification n'affecte en rien la géométrie de la culasse et notamment l'inclinaison des axes et des diamètres du puits de l'injecteur 6 et de la bougie de préchauffage 7. Cette modification n'est donc pas susceptible d'entraîner une augmentation des coûts de fabrication.

L'invention ne se limite pas au mode de réalisation qui a été décrit.

C'est ainsi que le bossage profilé en saillie peut avoir une forme différente de la forme d'un demi-cône, les parties latérales du bossage convergentes en direction de la surface de la préchambre traversée par le canal de transfert pouvant présenter une forme courbe, de manière à améliorer le guidage de l'écoulement des gaz lors de la détente.

Bien que la réalisation du bossage sur une pièce rapportée à l'intérieur de la culasse présente des avantages substantiels, il est également possible d'envisager de réaliser le bossage sur une partie de la paroi de la préchambre usinée à l'intérieur de la culasse.

L'invention s'applique à tous les moteurs Diesel rapides comportant au moins un cylindre auquel est associée une préchambre de turbulence ayant une configuration du type Advanced Comet.

## Revendications

1. Moteur à allumage par compression comportant au moins un cylindre (3) dans lequel un piston (4) est monté mobile dans la direction de l'axe (3a) du cylindre (3) et une préchambre de turbulence (5) dans laquelle débouche un injecteur de carburant (6) ayant une paroi interne de forme sensiblement sphérique communiquant avec le cylindre (3) par l'intermédiaire d'un canal de transfert (10) sensiblement rectiligne disposé sensiblement tangentiellement par rapport à la paroi interne de la préchambre (5) qui est traversée dans une direction sensiblement parallèle à l'axe (3a) du cylindre, en aval de l'injecteur (6) dans le sens de circulation (13) des gaz dans la préchambre (5), par un élément de chauffage rectiligne (7a) d'une bougie de préchauffage (7), caractérisé par le fait qu'une partie (15) de la paroi interne de la préchambre (5) située en aval de l'injecteur (6), dans le prolongement de l'élément de chauffage (7a) de la bougie de préchauffage (7) comporte un bossage profilé (16) en saillie vers l'intérieur de la préchambre (5) et s'étendant entre la partie d'extrémité de l'élément de chauffage (7a) et une zone (5a) voisine d'une extrémité débouchante (10a) du canal de transfert (10).

2. Moteur suivant la revendication 1, dans lequel une partie de la paroi de la préchambre (5) et le canal (10) sont usinés dans une pièce (9) rapportée à l'intérieur de la culasse (2) du moteur, caractérisé par le fait que le bossage (16) est situé dans une partie de la paroi interne de la préchambre (5) usinée à l'intérieur de la pièce rapportée (9).

3. Moteur suivant la revendication 2, caractérisé par le fait que le bossage (16) est réalisé en une seule pièce avec la pièce rapportée (9) pendant son usinage ou son formage.

4. Moteur suivant l'une quelconque des revendications 1 à 3, caractérisé par le fait que le bossage (16) présente une largeur dans une direction parallèle à la partie (15) de la paroi de la préchambre (5) et perpendiculaire à l'axe (7'a) de l'élément chauffant (7a) de la bougie de préchauffage (7) qui est décroissante dans le sens allant de l'élément chauffant (7a) de la bougie de préchauffage (7) vers une partie (5a) de la paroi interne de la préchambre (5) dans laquelle débouche le canal de transfert (10).

5. Moteur suivant la revendication 4, caractérisé par le fait que le bossage (16) est sensiblement inscrit à l'intérieur d'un demi-cône ayant un sommet au voisinage d'une zone (5a) de la surface interne de la préchambre (5) dans laquelle débouche le canal de transfert (10) et une base au voisinage de l'élément de chauffage (7a) de la bougie de préchauffage (7).

6. Moteur suivant la revendication 5, caractérisé par le fait que le demi-cône dans lequel est inscrit le bossage (16) comporte une base circulaire dont le rayon est compris entre 0,3 et 0,5 Rs et la hauteur entre 0,5 et 0,8 Rs, Rs étant le rayon de la paroi interne sphérique de la préchambre (5).

7. Moteur suivant la revendication 2, caractérisé par le fait que le bossage est sensiblement inscrit à l'intérieur d'un demi-cône dont le sommet est situé au voisinage d'une zone (5a) de la surface interne de la préchambre (5) dans laquelle débouche le canal de transfert (10) et la base au niveau d'une surface d'extrémité de la pièce rapportée (9) en butée à l'intérieur de la culasse (2).

## Patentansprüche

1. Dieselmotor mit wenigstens einem Zylinder (3), in welchem ein Kolben (4) in Richtung der Achse (3a) des Zylinders (3) beweglich ist, und einer Wirbelvorkammer (5), in welche eine Kraftstoffeinspritzdüse (6) mündet und welche eine im wesentlichen sphärische Innenwand aufweist, die mit dem Zylinder (3) über einen im wesentlichen geraden Überleitungskanal (10) in Verbindung steht, der im wesentlichen tangential in Bezug auf die Innenwand der Vorkammer (5) angeordnet ist, die unterstromig der Einspritzdüse (6), in Strömungsrichtung (13) des Gases in der Vorkammer (5) gesehen, in einer zur Achse (3a) des Zylinders im wesentlichen parallelen Richtung von einem geraden Heizelement (7a) einer Glühkerze (7) durchsetzt wird, dadurch gekennzeichnet, daß ein unterstromig der Einspritzdüse (6) in der Verlängerung des Heizelements (7a) der Glühkerze (7) gelegener Teil (15) der Innenwand der Vorkammer (5) einen profilierten Vorsprung (16) aufweist, der zum Inneren der Vorkammer (5) vorspringt und sich zwischen dem Endabschnitt des Heizelements (7a) und einer zu einem Mündungsende (10a) des Überleitungskanals (10) benachbarten Zone (5a) erstreckt.

2. Motor nach Anspruch 1, bei welchem ein Abschnitt der Wand der Vorkammer (5) und der Kanal (10) aus einem Teil (9) gearbeitet sind, das innen im Zylinderkopf (2) des Motors eingesetzt ist, dadurch gekennzeichnet, daß der Vorsprung (16) in einem Abschnitt der Innenwand der Vorkammer (5) liegt, der innen aus dem eingesetzten Teils (9) herausgearbeitet ist.

3. Motor nach Anspruch 2, dadurch gekennzeichnet, daß der Vorsprung (16) einstückig mit dem eingesetzten Teil (9) bei seiner Bearbeitung oder Formgebung hergestellt wird.

4. Motor nach irgendeinem der Ansprüche 1 bis 3, dadurch gekennzeichnet, daß der Vorsprung (16) in einer Richtung parallel zu dem Teil (15) der Wand der Vorkammer (5) und senkrecht zur Achse (7'a) des Heizelements (7a) der Glühkerze (7) eine Breite aufweist, die in der vom Heizelement (7a) der Glühkerze (7) zu einem Teil (5a) der Innenwand (5), in welchem der Überleitungskanal (10) mündet, gehenden Richtung abnimmt.

5. Motor nach Anspruch 4, dadurch gekennzeichnet, daß der Vorsprung (16) im wesentlichen in einen Halbkegel eingeschrieben ist, der eine Spitze im Bereich einer Zone (5a) der Innenfläche der Vorkammer (5), in welche der Überleitungskanal (10) mündet, und eine Basis im Bereich des Heizelements (7a) der Glühkerze (7) hat.

6. Motor nach Anspruch 5, dadurch gekennzeichnet, daß der Halbkegel, in den der Vorsprung (16) eingeschrieben ist, eine kreisförmige Basis, deren Radius zwischen 0,3 und 0,5 Rs liegt, und eine Höhe zwischen 0,5 und 0,8 Rs hat, wobei Rs der Radius der sphärischen Innenwand der Vorkammer (5) ist.

7. Motor nach Anspruch 2, dadurch gekennzeichnet, daß der Vorsprung im wesentlichen in einen Halbkegel eingeschrieben ist, dessen Spitze im Bereich einer Zone (5a) der Innenfläche der Vorkammer (5), in welche der Überleitungskanal (10) mündet, und dessen Basis auf Höhe einer gegen das Innere des Zylinderkopfs (2) anliegenden Endfläche des eingesetzten Teils (9) liegt.

## Claims

1. Compression ignition engine comprising at least one cylinder (3) in which a piston (4) is mounted so that it can move in the direction of the axis (3a) of the cylinder (3) and a preliminary turbulence chamber (5) into which emerges a fuel injector (6) and having an inside surface which is substantially spherical in shape and which is connected to the cylinder (3) by the intermediary of a substantially straight transfer channel (10) disposed substantially tangentially with respect to the inside surface of the preliminary chamber (5) which is traversed in a direction substantially parallel with the axis (3a) of the cylinder, downstream of the injector (6) in the direction of flow (13) of the gasses in the preliminary chamber (5) by a straight heating element (7a) of a pre-heating plug (7), characterized by the fact that a section (15) of the inside surface of the preliminary chamber (5) located downstream of the injector (6), in alignment with the heating element (7a) of the pre-heating plug (7) comprises a profiled boss (16) protruding towards the inside of the preliminary chamber (5) and extending between the end part of the heating element (7a) and a zone (5a) adjacent to an emerging end (10a) of the transfer channel (10).

2. Engine according to Claim 1, wherein a section of the surface of the preliminary chamber (5) and the channel (10) are machined in one piece (9) which is added to the inside of the cylinder head (2) of the engine, characterized by the fact that the boss (16) is located in a section of the inside surface of the preliminary chamber (5) machined inside the added part (9).

3. Engine according to Claim 2, characterized by the fact that the boss (16) is produced in one piece with the added part (9) during its machining or shaping.

4. Engine according to any one of Claims 1 to 3, characterized by the fact that the boss (16) has a width in a direction parallel with the section (15) of the surface of the preliminary chamber (5) and perpendicular to the axis (7'a) of the heating element (7a) of the pre-heating plug (7) which is decreasing in the direction going from the heating element (7a) of the pre-heating plug (7) towards a section (5a) of the inside surface of the preliminary chamber (5) in which the transfer channel (10) emerges.

5. Engine according to Claim 4, characterized by the fact that the boss (16) is substantially inscribed within a half-cone having an apex in the vicinity of a zone (5a) of the inside surface of the preliminary chamber (5) in which the transfer channel (10) emerges and a base in the vicinity of the heating element (7a) of the pre-heating plug (7).

6. Engine according to Claim 5, characterized by the fact that the half-cone in which the boss (16) is inscribed comprises a circular base whose radius is between 0.3 and 0.5 Rs and whose height is between 0.5 and 0.8 Rs, Rs being the radius of the inside spherical surface of the preliminary chamber (5).

7. Engine according to Claim 2, characterized by the fact that the boss is substantially inscribed within a half-cone whose apex is located in the vicinity of a zone (5a) of the inside surface of the preliminary chamber (5) in which the transfer channel (10) emerges and whose base is located at the level of an end surface of the added part (9) thrust fitted to the inside of the cylinder head (2).
